# EUROPÄISCHE PATENTSCHRIFT

(11) **EP 3 343 016 B1**
(45) Veröffentlichungstag und Bekanntmachung des Hinweises auf die Patenterteilung: **05.06.2019**
(21) Anmeldenummer: 18156067.3
(22) Anmeldetag: 03.02.2015
(51) Int. Cl.: F02M 61/18, F02M 61/16, F02M 61/12, B23H 9/00, B23H 3/00, B23H 3/04, B23H 9/14

(54) **WERKZEUG ZUM HERSTELLEN EINER KRAFTSTOFFEINSPRITZDOSIEREINRICHTUNG**
TOOL FOR MAKING A FUEL INJECTION DOSING DEVICE
OUTIL DE FABRICATION D'UN DISPOSITIF DE DOSAGE DE CARBURANT PAR INJECTION

(30) Priorität: 03.02.2014 DE 102014101308
(43) Veröffentlichungstag der Anmeldung: 04.07.2018
(62) Teilanmeldung aus: 15704733.3
(73) Patentinhaber: stoba Holding GmbH & Co. KG, 71522 Backnang (DE)
(72) Erfinder: GÜNTHER, Oliver, 88450 Berkheim (DE); GÜNTHER, Markus, 87767 Niederrieden (DE); HÖG, Thomas, 87733 Markt Rettenbach (DE); KONIETZNI, Hans-Joachim, 87700 Memmingen (DE); LEICHTLE, Matthias, 87757 Hasberg (DE); PFENDTNER, Klaus, 74405 Gaildorf (DE); WAGNER, Ulrich, 87746 Erkheim (DE)
(74) Vertreter: Winter, Brandl, Fürniss, Hübner, Röss, Kaiser, Polte - Partnerschaft mbB

(56) Entgegenhaltungen:
- DE-A1- 1 440 997
- DE-A1- 10 248 450
- US-A1- 2009 277 803
- US-B1- 6 387 242

## Beschreibung

### Gebiet der Erfindung

Die Erfindung betrifft ein Werkzeug zum Herstellen einer Kraftstoffeinspritzdosiereinrichtung für ein Kraftfahrzeug, wie einen PKW, einen LKW oder ein anderes Nutzfahrzeug, die unter anderem einen etwa topfartigen Grundkörper mit wenigstens einem Durchgangsloch aufweist, wobei der Grundkörper auf seiner Innenseite einen Ventilsitz ausbildet, der zum das Durchgangsloch verschließenden und öffnenden Zusammenwirken mit einem vorzugsweise konkaven, balligen, sphärischen oder kugelartigen Ventilkörper vorgesehen ist.

Aus dem Stand der Technik, etwa der DE 603 13 240 T2 ist eine Kraftstoffeinspritzeinrichtung bekannt zur Zuführung von unter Druck stehendem Kraftstoff zu einer Kraftstoffeinspritzvorrichtung, wobei das Kraftstoffeinspritzsystem die Kraftstoffeinspritzeinrichtung beinhaltet und folgendes umfasst: ein Druckspeichervolumen, um Kraftstoff bei einem ersten Anspritzdruckpegel durch einen Kraftstoffzuführkanal zu einer Kraftstoffeinspritzvorrichtung zuzuführen, ein Pumpenmittel, um den Druck des zu der Einspritzvorrichtung zugeführten Kraftstoffs auf einen zweiten Einspritzdruckpegel zu erhöhen, wobei das Pumpenmittel eine innerhalb einer Plunger-Bohrung definierte Pumpenkammer und einen Plunger-Kolben umfasst, der innerhalb der Plunger-Bohrung beweglich ist, um eine Kraftstoffdruckbeaufschlagung in der Pumpenkammer zu bewirken. Es ist als bedeutsam herausgestellt, dass es weiterhin ein Ventilmittel gibt, das in dem Kraftstoffzuführkanal zwischen der Pumpenkammer und dem Druckspeichervolumen angeordnet ist und das zwischen einer ersten Stellung, in der i) Kraftstoff bei dem ersten Einspritzdruckpegel (P1) zu der Einspritzvorrichtung zugeführt wird und ii) die Pumpenkammer mit dem Druckspeichervolumen in Verbindung steht, so dass bei dem
ersten Einspritzdruckpegel (P1) Kraftstoff von dem Druckspeichervolumen zu der Pumpenkammer fließen kann, und einer zweiten Stellung, in der die Verbindung zwischen der Einspritzvorrichtung und dem Druckspeichervolumen unterbrochen ist, so dass es ermöglicht wird, dass Kraftstoff bei dem zweiten Einspritzdruckpegel (P2) der Einspritzvorrichtung zugeführt wird, umschaltbar ist, wobei das Pumpenmittel weiterhin ein Antriebselement umfasst, das gemeinsam mit dem Plunger-Kolben betreibbar ist, wobei das Antriebsmittel mit einem Kipphebel der Maschine verbunden ist, so dass eine Bewegung des Antriebsmittels eine Schwenkbewegung des Kipphebels bewirkt.

Brennstoffeinspritzventile sind auch aus der DE 60 2005 001 261 T2 bekannt. Dort wird eine Kraftstoffeinspritzvorrichtung für eine Verbrennungskraftmaschine vorgestellt, wobei die Kraftstoffeinspritzvorrichtung auch ein Kupplungsmittel vorstellt, nämlich zum Zusammenkoppeln der Bewegung eines äußeren Ventils und eines inneren Ventils in Zellen, in denen das äußere Ventil um einen Betrag, der einen vorbestimmten Zellenbetrag übersteigt, von dem äußeren Ventilsitz wegbewegt wird, wodurch bewirkt wird, dass das innere Ventil sich einem inneren Ventilsitz weg hebt, um einen dritten Einspritzzustand zu schaffen, in welchem eine Kraftstoffzuleitung gleichermaßen durch erste und durch zweite Düsenauslässe zusammen erfolgt.

Verfahren zum Herstellen von metallischen Bauteilen sind aus der DE 10 2009 028 105 A1 bekannt. Dort wird ein generatives Verfahren zum Anfertigen eines metallischen Bauteils vorgestellt, umfassend die Schritte: a) Einlesen mindestens eines 3D-CAD-Datensatzes, enthaltend die Geometrie und die Werkstoffverteilung des zu fertigenden Bauteils, b) Auswahl mindestens eines metallischen Grundkörpers, c) Aufbau und/oder Abbau mindestens einer lokalen Geometrie an dem metallischen Grundkörper durch einen additiven Prozess und d) ggf. Feinbearbeitung, insbesondere Präzisionsbearbeitung durch einen abtragenden Prozess, sowie eine Vorrichtung zur Ausführung des Verfahrens und eines metallischen Bauteils, bei dem die Werkstoffe des metallischen Grundkörpers und der lokalen Geometrie unterschiedlich sind.

Ein Kraftstoffeinspritzventil ist bspw. auch aus der DE 10 2004 015 746 A1 bekannt. Dort wird ein Kraftstoffeinspritzventil einer Verbrennungskraftmaschine vorgestellt, mit einer Düseneinheit, in der eine äußere, mit mindestens einer ersten Einspritzöffnung zusammenwirkende Düsennadel und eine innere, mit mindestens einer zweiten Einspritzöffnung zusammenwirkende, die äußere Düsennadel axial durchgreifende Düsennadel axial verschiebbar angeordnet sind, um mit einer Ventilsteuereinheit, die einen Fluiddruck steuert, der in einem Ventilsteuerraum herrscht und dessen Niveau die Lage der äußeren und der inneren Düsennadel festlegt. Es ist ein Druckraum vorgesehen, dessen Volumen durch die Bewegung mindestens einer der beiden Düsennadeln so veränderbar ist, dass der Druckraum eine Druckänderung erfährt und eine zusätzliche Kraft auf mindestens eine der Düsennadeln wirkt.

Weiterer Stand der Technik ist aus der DE 100 46 304 C1, der DE 196 33 260 A1, der DE 10 2005 049 534 A1, der EP 2 018 925 A2, der FR 2 864 916 A1, der US 2013/0062441 A1 und der DE 198 54 793 bekannt.

Gattungsgemäße Kraftstoffeinspritzdosiereinrichtungen sind bei Dieseleinspritzanlagen, aber bei von Benzineinspritzanlagen, sog. "GDI-Anlagen" bekannt. Solche GDI-Anlagen, also Gas Direct Injection-Anlagen müssen Einspritzdrücke von bis zu 500 bar, d.h. 50 MPa, gewachsen sein. Daher müssten die Bauteile des Einspritzsystems an die Druckbeanspruchung angepasst werden. Hier ist eine gute Oberflächenqualität der gefertigten Bauteile entscheidend, damit eine Bruchgefahr durch Kerbwirkung vermindert oder am besten ausgeschlossen wird.

Zu diesem Zweck wird im Grundkörper üblicherweise radial nach außen, von einem Hauptloch sich erstreckend, das Vorhalten von Längsnuten, die auch als Taschen bezeichnet werden können, gefordert. Häufig sind fünf Taschen benötigt.

Üblicherweise werden die Grundkörper der Kraftstoffeinspritzdosiereinrichtungen innen und außen gedreht. Innen, d.h. die Innenseite des Grundkörpers weiter definierend, wird ein Fräsprozess oder ein anderer spanabhebender Prozess eingesetzt, um die Längsnuten/Taschen zu erzeugen. Allerdings ist dann eine lange Bearbeitungszeit die Folge, eine Gratbildung zu beobachten und ein Kostenanstieg zu beklagen. Die Gratbildung hat auch eine schlechtere Oberflächenqualität zur Folge. Die pro
Zeiteinheit zu produzierenden Teile sind somit teurer, von schlechterer Qualität und nur bedingt einsetzbar.

Es wurde daher versucht, mit anderen Verfahren einen geeigneten Grundkörper zu erzeugen. Dabei findet neuerdings auch ein MIM-Verfahren, d.h. ein Metal Injection Molding-Verfahren Einsatz. Als spezielle Ausgestaltung hat sich Pulverspritzgießen oder ähnliche Spritzgussverfahren angeboten. Leider haben die Grundkörper dann aber auch eine große Bruchgefahr, da das Material spröder ist. Auch kann die Bauteiloberfläche porös sein, was ebenfalls unerwünscht ist.

Es wurde auch der vermehrte Einsatz von Kaltverformungsverfahren getestet, wobei solche Prozesse grundsätzlich gute Ergebnisse erzeugen, aber die Konzentrizität und Position der inneren Ausnehmungen und Taschen derzeit, insbesondere bezogen auf den Außenumfang, zu ungenau ist. Die innere Gravur, also die Innenausnehmungen bzw. die Raumanordnung der Innenausnehmungen, sind dann exzentrisch.

Die Werkstückgenauigkeit ist allerdings maßgeblich und auschlaggebend für ein langlebiges und präzises Arbeiten des Bauteils. Auch die Reproduzierbarkeit des Einspritzbildes von einem Bauteil zum anderen ist maßgeblich davon abhängig. Gerade eine solche Reproduzierbarkeit ist aber gewünscht.

Gattungsgemäßer Stand der Technik gemäß der Präambel des unabhängigen Anspruchs ist in den Dokumenten DE 14 40 997 A1 und DE 102 48 450 A1 offenbart.

Es ist daher die Aufgabe der vorliegenden Erfindung, die Nachteile aus dem Stand der Technik abzustellen oder zumindest zu mindern und eine kostengünstige, schnell zu fertigende, qualitativ hochwertige und langlebige Kraftstoffeinspritzdosiereinrichtung zur Verfügung zu stellen.

Diese Aufgabe wird bei einem gattungsgemäßen Werkzeug erfindungsgemäß durch die Merkmale des Kennzeichens von Anspruch 1 gelöst.

Unter einem elektrochemischen Bearbeiten wird ein Verfahren verstanden, das auch als elektrochemisches Abtragverfahren (Electro-Chemical Machining, d.h. ECM) in der Fachliteratur bekannt ist. Eine spezielle Unterform dieses Verfahrens wird auch als Entgratungsverfahren eingesetzt. Dieses elektrochemische Abtragen oder elektrochemische Bearbeiten ist ein abtragendes Fertigungsverfahren, insbesondere für sehr harte Werkstoffe. Es ist dem Trennen zugeordnet und geeignet für einfache Entgratarbeiten bis zur Herstellung kompliziertester räumlicher Formen. Unter elektrochemischen Bearbeitungverfahren werden auch die bekannten PECM-Verfahren (Pulse Electro-Chemical Machining) oder Precise Electro-Chemical Machining-Verfahren verstanden. Es sind nun Präzisionsanforderungen im Mikrometerbereich erfüllbar, genauso wie eine Mikrobearbeitung möglich ist. Bei ECM-Verfahren ist ein fehlender Kontakt zwischen dem Werkzeug und dem Werkstück festzustellen, wobei jedoch Isolierabschnitte durchaus in Kontakt mit einem Werkstück geraten können, so dass über einen Isolierabschnitt ein Werkzeug mit einem Werkstück in Kontakt steht. Grundsätzlich werden aber keine mechanischen Kräfte übertragen und Werkstoffeigenschaften wie Härte oder Zähigkeit nehmen keinen Einfluss auf den Prozess. Von Bedeutung sind jedoch Eigenschaften wie Schmelzpunkt, Wärme- und elektrische Leitfähigkeit. Üblicherweise wird das Werkstück positiv geladen und agiert als Anode, wohingegen das Werkzeug negativ geladen/polarisiert wird und dann als Kathode agiert.

Um den dafür erforderlichen Stromschluss zu erzeugen, bedient man sich in den häufigsten Fällen einer äußeren Spannungsquelle. Die Form der Werkzeugkathode gibt häufig die negative Form der auf, im und am Werkstück zu erzeugenden Bearbeitung vor. ECM ist also ein abbildendes Verfahren.

Am Werkzeug findet prozessbedingt kein Verschleiß statt. Zwischen dem Werkzeug und dem Werkstück muss in Abhängigkeit von den elektrischen Parametern und von den Strömungsverhältnissen eines Elektrolyts ein Spalt eingestellt sein. Eine übliche Spaltbreite ist im Bereich von wenigen Mikrometern, bspw. 0,05 mm bis ca. 1 mm, angeordnet. Den Ladungstransport im Arbeitsspalt übernimmt eine Elektrolyt-Lösung, wie z.B. eine wässrige Lösung von Natriumchlorid (NaCl, Kochsalzlösung), Natriumnitrat (NaNO₃) oder anderen wässrigen Lösungen. Der entstehende Elektronenstrom löst Metallionen vom Werkstück. Die gelösten Metallionen gehen dann an der Anode Reaktionen mit Teilen des gespaltenen Elektrolyts ein. An der Kathode reagiert der Elektrolytrest mit Wasser. Das Endprodukt fällt als Metallhydroxid an, welches sich als Schlamm absetzt und entfernt werden muss.

Wird die Innenseite des Grundkörpers elektrochemisch bearbeitet, so können Taschen in definierter Breite, Tiefe und Form eingebracht werden. Die Kanten können nach der Bearbeitung einen definierten Verrundungsradius aufweisen. Mit der Verrundung der Kanten entsteht kein Grad, auch bei einem nachfolgenden Honen auf der Innenseite, etwa im Bereich von Führungsflächen für den Ventilkörper.

Die Erfindung betrifft also ein Werkzeug nach Anspruch 1 zum Herstellen einer Kraftstoffeinspritzdosiereinrichtung mit einer elektrisch aufladbaren, wenigstens abschnittsweise hohlen Kathode. Um ein gut wirksames Werkzeug zur Verfügung zu stellen weist die Kathode an einem Ende eine elektrisch isolierend wirkende bzw. aus elektrisch isolierendem Material bestehende / aufgebaute Isolierlage auf, durch die ein Eingriffsabschnitt der Kathode überstehend ragt. Bei Einsatz dieses Werkzeugs lässt sich eine Kraftstoffeinspritzdosiereinrichtung kostengünstig, genau und schnell herstellen.

So ist es von Vorteil, wenn bei einer Kraftstoffeinspritzdosiereinrichtung auf der Innenseite des Grundkörpers eine oder mehrere sich in Axialrichtung oder in jede andere Richtung, bspw. schräg oder quer zur Axialrichtung erstreckende Längsnuten mit einem elektrochemischen Bearbeitungsverfahren eingebracht ist/sind. Die Betätigbarkeit des Ventilkörpers kann dadurch verbessert werden, wenn mehrere Nuten vorhanden sind. Die Anforderungen an moderne Verbrennungskraftmaschinen können dadurch erfüllt werden.

Dabei ist es ferner von Vorteil, wenn etwa 4, 5 oder 6 auf der Innenseite des Grundkörpers, etwa gleich verteilte oder ungleichmäßig verteilte, bspw. gruppierte, Längsnuten voneinander durch Stege, die vorzugsweise aus dem Grundkörpermaterial bestehen, getrennt sind, welche im Übergangsbereich zu den Längsnuten, etwa im Bereich von Längskanten, elektrochemisch verrundet sind. Selbst bei einem nachfolgenden Honen der Innenseite des Grundkörpers wird ein störender Grat dann vermieden. Durch die Stege wird die Funktionalität verbessert. Auch wird die Stabilität verbessert.

Der Grundkörper kann eine vorzugsweise abschnittsweise hohl-zylindrische Wandung aufweisen, die an einem Ende in einen Boden übergeht.

Der Aufbau des Grundkörpers kann dann einfach gehalten werden, wobei trotzdem ein lang andauernder Betrieb sichergestellt werden kann.

Für die Funktionalität ist es von Vorteil, wenn der Boden auf der Innenseite des Grundkörpers eine Vertiefung aufweist, die vorzugsweise eine mehrfach konisch gestufte oder napfartige Form aufweist.

Es ist auch zweckmäßig, wenn sich die Längsnuten vom bodennahen Ende eines hohlzylindrischen Wandungsabschnitts durch einen vorzugsweise eine konische Innenkontur festlegenden Übergangabschnitt des Grundkörpers bis zum Boden erstrecken.

Die Unterbrechbarkeit einer Kraftstoffzufuhr kann einfach gewährleistet werden, wenn das Durchgangsloch im Bereich des Ventilsitzes angeordnet ist.

Ferner ist es von Vorteil, wenn 4, 5, 6 oder 7 Durchgangslöcher winkelgleich um eine Mittelachse des Grundkörpers verteilt sind und/oder quer/schräg zur Mittelachse in zueinander gleichem Winkel durch das Material des Grundkörpers verlaufen. Das bei einer Einspritzung von Kraftstoff erzeugte Einspritzbild ist dann einfach vorherbestimmbar. Die Winkellagen der einzelnen Spritzlöcher sind in einigen Ausführungsformen nicht gleich. Besonders die Winkel zur Senkrechten können unterschiedlich sein, um so den Einspritzstrahl gezielt in definierte Bereiche des Brennraums zu verbringen.

Die Montage wird vereinfacht, wenn der Boden auf seiner Außenseite eine zentrisch angeordnete Erhabenheit mit vorzugsweise bauchiger, konkaver oder (teil-)sphärischer
Form aufweist.

Die gesamte Kraftstoffeinspritzdüse kann verbessert werden, wenn der als Kugel ausgeformte Ventilkörper stofflich von einer mit ihm bedarfsweise in Kontakt bringbaren Nadel getrennt ist, und der Ventilkörper und die Nadel so zueinander angeordnet sind, dass der Ventilkörper von der Nadel zumindest auch in Axialrichtung verlagerbar ist. Wird nun die Nadel von der etwa kugelartig ausgeformten Ventilkörperkonfiguration abgehoben, so kann Fluid, nämlich Kraftstoff die Kugel hintergreifen und in Richtung der Nadel vom Durchgangsloch entfernen, so dass der Kraftstoff durch das Durchgangsloch austreten kann.

Dabei ist es von besonderem Vorteil, wenn die Abmessungen, insbesondere die axiale Länge der Längsnuten des Grundkörpers und die Außenabmessung des Ventilkörpers so aufeinander angepasst sind, dass vom durchgangslochfernen Ende des Grundkörpers herangeführtes Fluid, wie flüssiger Kraftstoff, etwa Benzin oder Diesel, den Ventilkörper umspült und von dem Durchgangsloch abhebt, um dann dort auszudringen. Natürlich ist es bei einer Vielzahl von Durchgangslöchern denkbar, dass der Ventilkörper von allen Durchgangslöchern abgehoben wird und der Kraftstoff dann durch alle Durchgangslöcher aus der Kraftstoffeinspritzdosiereinrichtung austritt. Das Werkzeug zum Herstellen der Kraftstoffeinspritzdosiereinrichtung kann auch verbessert werden, wenn auf der Oberfläche der Isolierlage wenigstens eine, vorzugsweise radial ausgerichtete, Elektrolyt-Flüssigkeitsleitnut vorhanden ist und/oder durch das Material wenigstens ein Elektrolyt-Flüssigkeitsleitkanal, mit vorzugsweise geschlossenem, etwa rundem (gebohrtem) Querschnitt, vorhanden ist.

Verfärbungen auf der Oberseite des Werkstücks, also des Grundkörpers der Kraftstoffeinspritzdosiereinrichtung, können vermieden werden, wenn der Elektrolyt-Flüssigkeitsleitkanal aus zwei zueinander quer, etwa orthogonal ausgerichteten Kanalabschnitten, ausgebildet ist, von denen der eine axial verlaufend ausgerichtet ist und der andere radial verlaufend ausgerichtet ist. Schon die Kanalausgestaltung ist diesbezüglich von Vorteil. Durch die Orthogonalität oder die quer zueinander Ausgerichtetheit, kann der Strömungswiderstand niedrig gehalten werden.

Es ist auch von Vorteil, wenn der über die Isolierlage überstehende Eingriffsabschnitt von segmentartigen, in Axialrichtung verlaufenden Isolierabschnitten umgeben ist, zwischen denen Wirkbereiche der Kathode unabgedeckt sind. Auf diese Weise kann an nur bestimmten Stellen und nicht überall ein Abtrageffekt am Hohlkörper auftreten.

Es ist auch von Vorteil, wenn die Wirkbereiche kathodisch wirkende, elektrisch aufgeladene / aufladbare radial äußere Endflächen aufweisen.

Wenn die Endflächen konkav oder ballig ausgeformt sind, so kann eine ursprünglich zylinderartig ausgebildete Form der Kathode, insbesondere des Eingriffsabschnitts unverändert gelassen werden, wenn durch spanende Abtragung die Endform der Kathode geschaffen ist.

Für das Funktionieren des Werkzeugs beim Fertigungsverfahren der Kraftstoffeinspritzdosiereinrichtung ist es von Vorteil, wenn die Wirkbereiche durch flügelartige, sich von einem Zentralkörper des kathodisch einsetzbaren Eingriffsabschnitts radial abstehende Wirkelemente ausgebildet sind.

Dabei ist es zweckmäßig, wenn die Wirkelemente integrale Bestandteile des Zentralkörpers sind oder (alternativ oder ergänzend) als separate Bauteile form-, kraft- und/oder stoffschlüssig mit dem Grundkörper verbunden sind. Die Fertigung eines solchen Werkzeugs kann dadurch vereinfacht werden und die Lebensdauer erhöht werden.

Auch ist es von Vorteil, wenn die radial äußere Oberfläche der zwischen den Wirkelementen vorhandenen Isolierabschnitte bündig zu den Endflächen ist oder radial nach außen verlagert/erhaben ist.

Es ist von Vorteil, wenn die Wirkelemente im Querschnitt eine gleichbleibende Dicke aufweisen oder zum Inneren des Eingriffsabschnitts dicker werden.

Das Abtragbild ist vorhersehbar, wenn die Dicke über die axiale Erstreckung unverändert bleibt/ist, also die Wirkelemente in Längsbetrachtung eine gleichbleibende Dicke aufweisen.

Es ist vorteilhaft, dass mehrere, etwa 4, 5, 6, 7, 8, 9 oder mehr Wirkelemente gleichverteilt vom Zentralkörper abstehen.

Das Verfahren kann auch dadurch weitergebildet werden, dass auf der Innenseite des Grundkörpers wenigstens eine Längsnut durch ein elektrochemisches (Bearbeitungs-)Verfahren eingebracht wird, vorzugweise mehrere Längsnuten, etwa in einem einzigen Arbeitsschritt, in den Grundkörper eingebracht werden. Auf diese Weise muss nur einmal Strom an die Kathode angelegt werden, um die gesamte Längsnut bzw. alle Längsnuten in einer bestimmten Zeitspanne herzustellen.

Dabei ist es von Vorteil, wenn ein Werkzeug mit einer Kathode in ein in den Grundkörper voreingebrachtes etwa spanend, wie drehend oder fräsend, gefertigtes (Sack-)Loch, von dessen Innenseite sich das Durchgangsloch bis zur Außenseite erstreckt, eingesteckt wird und (statisch) nach Positionierung im (Sack-)Loch unter Zwischenschaltung einer Elektrolyt-Flüssigkeit abtragend auf die Innenseite des (Sack-)Lochs wirkt oder (dynamisch) die Kathode schon beim Einbringen in den Grundkörper unter Zwischenschaltung einer Elektrolyt-Flüssigkeit abtragend auf die Innenseite des (Sack-)Lochs wirkt.

Es ist auch von Vorteil, wenn die Elektrolyt-Flüssigkeit erst durch die Kathode in den Grundkörper und dann aus ihm herausgefördert wird, oder (was sogar besser ist) erst in den Grundkörper geleitet und dann durch die Kathode hindurch herausgefördert wird. Gerade im zweiten Fall kann die Wärmeentwicklung bei der Fertigung niedrig gehalten werden bzw. die auftretende Wärme gleich abgeführt werden. Dadurch wird die Präzision des erhaltenen Werkstücks höher.

Es ist auch von Vorteil, wenn das erfindungsgemäße Werkzeug in den Grundkörper eingebracht wird, wobei der Spalt zwischen der Außenoberfläche des Eingriffsabschnitts und der Innenseite des Grundkörpers ca. wenige Mikrometer, etwa ca. 0,05 mm bis 0,5 mm, vorzugsweise ca. 0,1 mm, 0,2 mm oder 0,3 mm, beträgt.

Letztlich wird somit eine statische ECM-Bearbeitung und eine dynamische ECM-Bearbeitung möglich. Bei der statischen ECM-Bearbeitung ist festzustellen, dass die Kathode im Werkstück (der Anode) steht. Die Kathode ist vollständig isoliert. Sie hat lediglich fünf, mehr oder weniger freigelegte Kathodenflächen, welche die Taschen in die Drehteile einarbeiten. Beim dynamischen Verfahren wird in das vorgebohrte Werkstück von der Kathode mit Vorschub hineingefahren, wobei während des Einfahrens die Taschenkonturen erzeugt werden. Die bevorzugte Elektrolyt-Führung ist von außen zwischen der Kathode und der Anode hindurch und dann durch die Kathode hinaus.

Es ist eine geeignete Materialwahl vorzunehmen, um die Verlustleistung der Kathode zu vermeiden und die Abfuhr von Verlustleistung durch den Elektrolyt/das Elektrolyt-Mittel vorzusehen. Die Elektrolyt-Strömung kann durch Anpassung/Optimierung der Kathodenform verringert werden. Dies ist gewünscht.

Eine Optimierung des Kathodenquerschnittes kann durch Anpassung des Grundkörpers erreicht werden.

Die nach innen weisenden Endflächen der Stege können als Führungsflächen bezeichnet werden, da an ihnen der Ventilkörper abrollt oder gleitet.

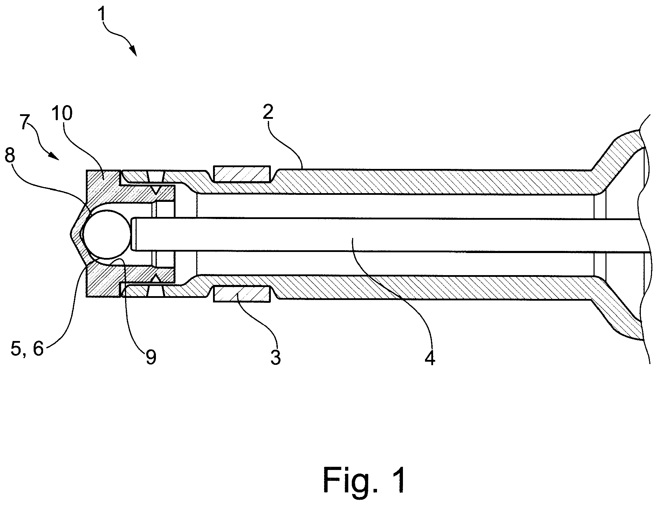

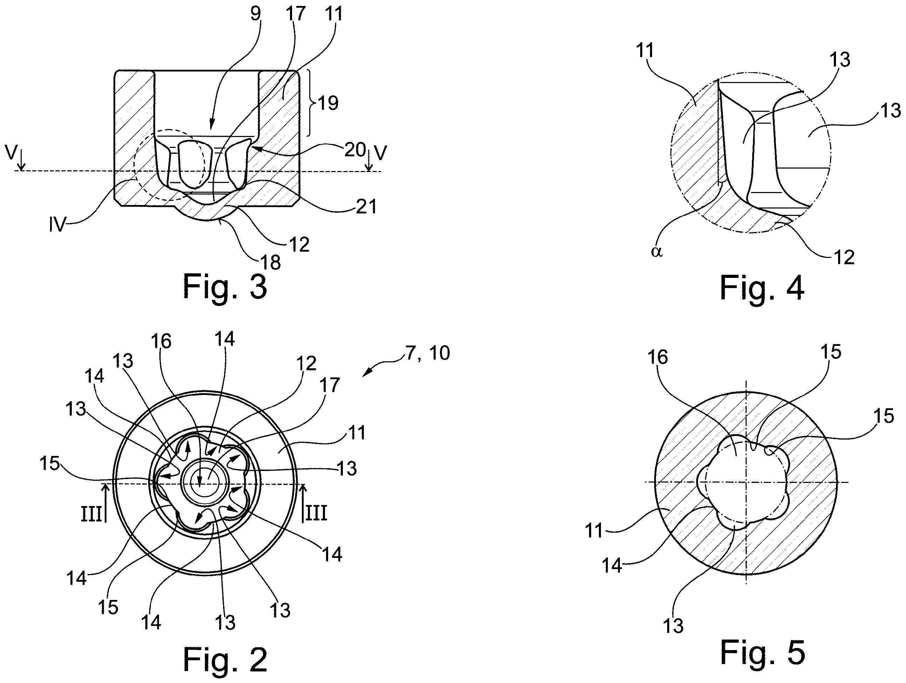

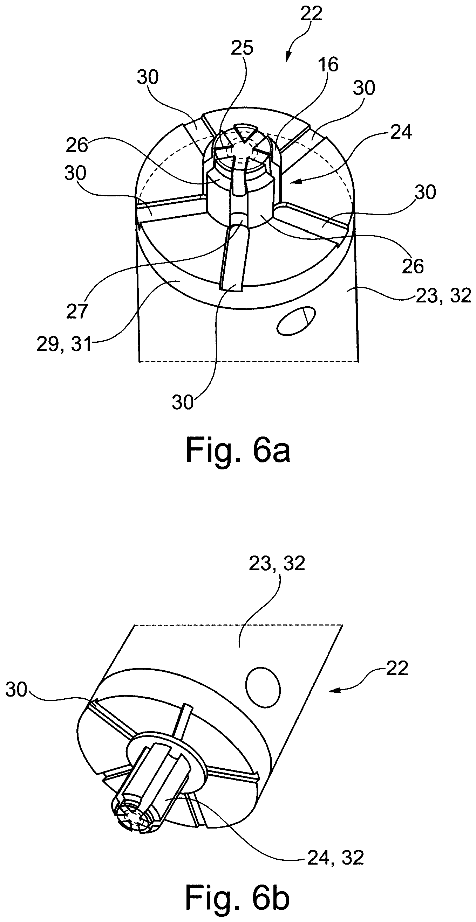

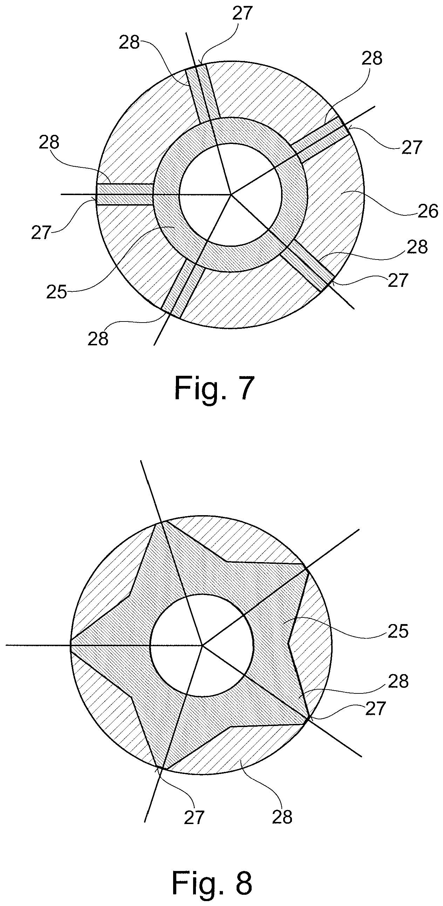

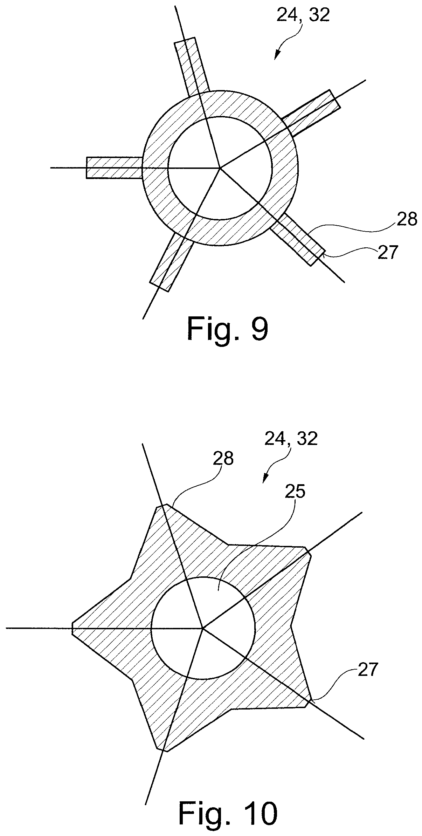

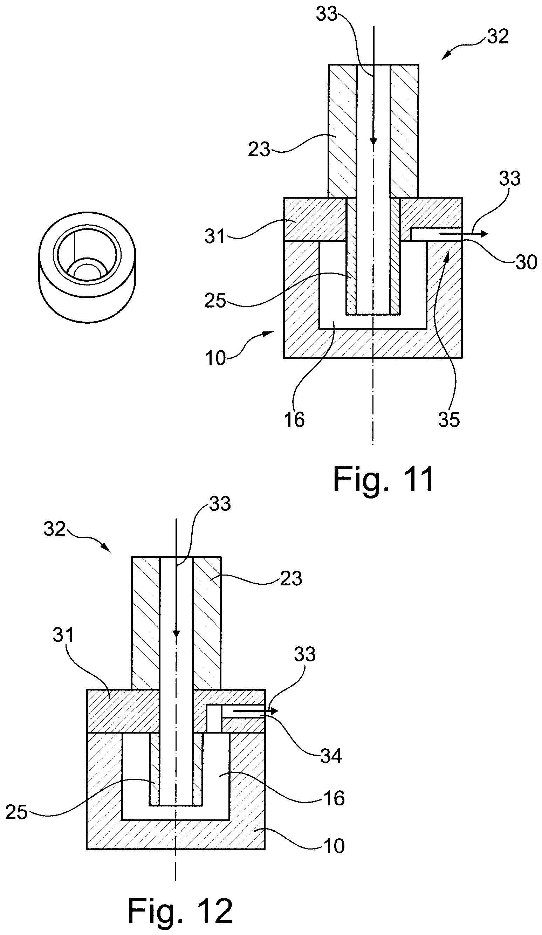

Die Erfindung wird nachfolgend auch mit Hilfe einer Zeichnung näher erläutert. Dabei sind unterschiedliche Ausführungsformen dargestellt. Es zeigen:Fig. 1 eine Kraftstoffeinspritzdosiereinrichtung im eingebauten Zustand in einer Kraftstoffeinspritzdüse in einem Längsschnitt, Fig. 2 eine Draufsicht nur auf die Kraftstoffeinspritzdosiereinrichtung von der Kraftstoffzuführseite, Fig. 3 einen Längsschnitt entlang der Linie III aus Fig. 2 durch die dort dargestellte Kraftstoffeinspritzdosiereinrichtung, Fig. 4 eine Vergrößerung des Bereiches IV aus Fig. 3, Fig. 5 einen Querschnitt entlang der Linie V durch die Kraftstoffeinspritzdosiereinrichtung aus Fig. 3, Fig. 6a und 6b perspektivische Darstellungen eines Werkzeugs zum Herstellen einer Kraftstoffeinspritzdosiereinrichtung, Fig. 7 einen Querschnitt durch einen Eingriffsabschnitt einer als Kathode wirkenden Werkzeugausgestaltung der Fig. 6a und 6b, Fig. 8 eine Variante zu der Ausgestaltung aus Fig. 7 eines Eingriffsabschnitts einer als Kathode wirkenden Werkzeugausgestaltung, Fig. 9 der Eingriffsabschnitt aus Fig. 7 ohne isolierende Segmente auf der Außenseite zwischen flügelartigen Wirkelementen, Fig. 10 der Eingriffsabschnitt aus Fig. 8 im Querschnitt ohne isolierende Segmente, ähnlich zu der Darstellung aus Fig. 9, Fig. 11 eine erste Darstellung eines Verfahrens zum Herstellen einer Kraftstoffeinspritzdosiereinrichtung, und Fig. 12 ein Verfahren zum Herstellen einer Kraftstoffeinspritzdosiereinrichtung mit einem erfindungsgemäßen Werkzeug.

Die Figuren sind lediglich schematischer Natur und dienen nur dem Verständnis der Erfindung. Die gleichen Elemente sind mit denselben Bezugszeichen versehen. Merkmale der einzelnen Ausführungsbeispiele können untereinander ausgetauscht werden. Ein spezielles Merkmal des einen Ausführungsbeispiels kann also in einem anderen Ausführungsbeispiel realisiert werden.

In Fig. 1 ist ein brennkammernächstgelegener Abschnitt einer Kraftstoffeinspritzdüse 1 dargestellt. Diese Kraftstoffeinspritzdüse 1 kann an eine nicht dargestellte Betätigungsvorrichtung, welche eine Magnetspule, einen Magnettopf, eine Umspritzung, Steckerpins, Anschlusshülsen, Stützscheiben, O-Ringe, Klemmhülsen, Einstellhülsen, Innenpole, Deckel, Anschlagringe und ähnliche Bauteile aufweisen kann, aktiviert werden.

Die Kraftstoffeinspritzdüse 1 beinhaltet auch eine Ventilhülse 2, auf der ein Dichtelement 3, wie ein Dichtring, aufgesetzt ist. Innerhalb der Ventilhülse 2 kann ein Aktivierungselement, wie eine Nadel 4 angeordnet sein. Die Nadel 4 wirkt als Stößel. Am brennkraftnächstgelegenen Ende der Nadel 4 ist ein Ventilkörper 5 angeordnet. Der Ventilkörper 5 ist als Kugel 6 oder kugelähnlich ausgebildet. Der Ventilkörper 5 ist innerhalb einer Kraftstoffeinspritzdosiereinrichtung 7 angeordnet. Dabei formt die Kraftstoffeinspritzdosiereinrichtung 7 einen Ventilsitz 8 auf der Innenseite 9 eines Grundkörpers 10 aus. Der Grundkörper 10 ist in die Ventilhülse 2 eingesteckt, vorzugsweise eingepresst und zusätzlich oder alternativ formschlüssig gesichert. Der Grundkörper 10 kann grundsätzlich stoff-, kraft- und/oder formschlüssig an der Ventilhülse 2 angebunden sein.

Der topfartig ausgebildete Grundkörper 10 ist auch in Fig. 2 vergrößert dargestellt. Er weist eine umlaufende Wandung 11 auf, die an einem Ende von einem Boden 12 abgeschlossen wird.

Die integrale Ausgestaltung des Bodens 12 mit der Wandung 11 ist in Fig. 3 gut zu erkennen.

Zurückkommend auf Fig. 2 seien fünf Längsnuten 13 herausgestellt, die auch als Taschen bezeichnet werden können. Die Längsnuten 13 haben eine konkave, gleichmäßig gerundete Form. Sie werden voneinander durch Stege 14 getrennt. An jeder Seite eines Steges 14 ist eine in Axialrichtung ausgerichtete Kante 15 vorhanden.

Die Kanten 15 sind verrundet/gerundet ausgestaltet, insbesondere mit einem Radius von 300 - 500 µm. Radienwerte von ca.100 µm bis 800 µm, insbesondere ca. 600 µm, 650 µm, 700 µm und 750 µm sind besonders bevorzugt. Die Längsnuten 13, die Abrundungen der Kanten 15 und die Form der durch sie gebildeten Ausnehmung 16 sind durch ein elektrochemisches Bearbeitungsverfahren bestimmt bzw. ausschließlich und/oder abschließend hervorgerufen.

Wie auch gut in Fig. 3 zu erkennen, ist mittig, d.h. zentral/zentrisch eine Vertiefung 17 ausgebildet. Wobei die Vertiefung 17 auf der Innenseite 9 vorhanden ist, ist auf einer Außenseite, komplementär zur Vertiefung 17 eine Erhabenheit 18 in Form einer Kuppe/einer Balligkeit, einer Konvexität/eines Aufwurfs vorhanden.

Dass sich die Längsnuten 13 nicht über die komplette Länge der Innenseite 9 erstrecken, ist in Fig. 3 gut zu erkennen. So sind die Längsnute 13 zwischen einem hohlzylindrischen Wandungsabschnitt 19 und einem angefasten Bereich 20 bis zu einem bodennahen Übergangsbereich 21 verlaufend. Die für den angefasten Bereich 20 maßgebliche Schräge, in welchem die Längsnuten/Taschen 13 (ausschließlich) angeordnet sind, hat eine Schräge von ungefähr 5° bis 10°.

Dieser Winkel ist in Fig. 4 als α gekennzeichnet. Auch in Fig. 5 ist das regelmäßige Abwechseln von Stegen 14 mit Längsnuten 13 gut zu erkennen sowie die Gerundetheit von Kanten/Längskanten 15 im Bereich der Stege 14.

In den Fig. 6a und 6b ist die Spitze eines erfindungsgemäßen Werkzeugs 22 dargestellt. Das Werkzeug 22 weist einen Basiskörper 23 bspw. aus Messing auf. Der Basiskörper 23 ist zur Spitze hin, also bei Einsatz in dem Grundkörper 10, in diesen hinein ragend mit verkleinertem Durchmesser vorgesehen und wird dort als Eingriffsabschnitt 24 bezeichnet. Der Eingriffsabschnitt 24 weist einen hohlen Kern 25 aus demselben Material wie der Basiskörper 23 auf, nämlich vorzugsweise aus Messing. Auf der Außenseite ist der Eingriffsabschnitt 24 von segmentartigen Isolierabschnitten 26 umgeben. Die segmentartigen Isolierabschnitte 26 sind zum distalen Ende des Eingriffsabschnitts 24 hin angefast oder abgeflacht. Zwischen den segmentartigen Isolierabschnitten 26 gelangt eine radial äußere Endfläche 27 vom Kern 25 abstehenden Wirkelementen 28 an die Oberfläche. Radial sich von den Endflächen 27 entfernend sind in einem Ring 29 Elektrolyt-Flüssigkeitsleitnuten 30 vorgesehen. Der Ring 29 ist aus isolierendem Material aufgebaut und wirkt somit als Isolierlage 31. Der Ring 29 ist am Ende des größeren Durchmessers des als Kathode dienenden Basiskörper 23 vorhanden. Der Basiskörper 23, der letztlich den Kern 25 des Eingriffsabschnitts 24 ausbildet, ist elektrisch aufladbar und wirkt dann als Kathode 32.

Diese Kathode 32 ist auch in Fig. 6b dargestellt.

In Fig. 7 ist ein Querschnitt durch den Eingriffsabschnitt 24 wiedergegeben. Die Wirkelemente 28 stehen dabei flügelartig von einer rohrartigen Ausgestaltung des Kerns 25 ab. Der Kern 25 hat dann eine Wanddicke, die relativ dünn ist, bspw. zwischen 0,2 bis 0,3 mm. Die integralen Wirkelemente 28 verbringen dann Strom an ihre Endflächen 27, wobei der an den Endflächen 27 auftretende Strom zu einem Materialabtrag auf der Innenseite 9 des Grundkörpers 10 führt, wenn die Kathode 32 in der Ausnehmung/dem (Sack-)Loch 16 steckt oder eingesteckt wird. Die Isolierabschnitte 26 sind dann immer zwischen zwei integralen mit dem Kern 25 verbundenen Wirkelementen 28 positioniert.

Dies ist auch in dem Ausführungsbeispiel der Fig. 8 der Fall, allerdings unterscheidet sich die Form der Flügel / der Wirkelemente 28 von dem Ausführungsbeispiel gemäß Fig. 7. Der Querschnitt des Kerns 25 mit Wirkelementen 28 ist dann eher sternförmig / weihnachtssternartig, derart, dass sich die Wirkelemente 28 in Richtung des Kerns 25 verbreitern.

In den Fig. 9 und 10 sind die Kathodenmaterialien der Eingriffsabschnitte 24 im Querschnitt wiedergegeben. Im Inneren der Kathode 32 fließt im Betrieb eine Elektrolyt-Flüssigkeit, entweder in den Grundkörper 10 der Kraftstoffeinspritzdosiereinrichtung 7 hinein, oder aus ihm heraus. Dies ist besonders gut in den Fig. 11 und 12 zu erkennen. Der Elektrolyt-Fluss ist mit den Pfeilen 33 gekennzeichnet. In den Ausführungsbeispielen der Fig. 11 und 12 fließt durch das Innere der Kathode 32 Elektrolyt-Flüssigkeit in das Innere des Grundkörpers 10 hinein und dann entweder (siehe Fig. 11) durch eine Elektrolyt-Flüssigkeitsnut 30 nach außen oder durch einen Elektrolyt-Flüssigkeitskanal 34 (siehe Fig. 12) nach außen. Viel vorteilhafter ist es jedoch, wenn die Flussrichtung umgedreht wird.

In der Ausführungsform nach Fig. 11 zeigt sich an der Stelle 35 eine Verfärbung auf der Isolierlage 31 zugewandten Oberfläche des Grundkörpers 10.

### Bezugszeichenliste

- 1: Kraftstoffeinspritzdüse
- 2: Ventilhülse
- 3: Dichtelement
- 4: Nadel
- 5: Ventilkörper
- 6: Kugel
- 7: Kraftstoffeinspritzdosiereinrichtung
- 8: Ventilsitz
- 9: Innenseite
- 10: Grundkörper
- 11: Wandung
- 12: Boden
- 13: Längsnut / Tasche
- 14: Steg
- 15: Kante / Längskante
- 16: Ausnehmung / (Sack-)Loch
- 17: Vertiefung
- 18: Erhabenheit
- 19: hohlzylindrischer Wandungsabschnitt
- 20: angefaster Bereich
- 21: Übergangsbereich
- 22: Werkzeug
- 23: Basiskörper
- 24: Eingriffsabschnitt
- 25: Kern
- 26: segmentartiger Isolierabschnitt
- 27: Endfläche
- 28: Wirkelement
- 29: Ring
- 30: Elektrolyt-Flüssigkeitsnut
- 31: Isolierlage
- 32: Kathode
- 33: Elektrolyt-Flüssigkeitsfluss
- 34: Elektrolyt-Flüssigkeitskanal
- 35: Verfärbung

## Patentansprüche

1. Werkzeug (22) zum Herstellen einer Kraftstoffeinspritzdosiereinrichtung (7), mit einer elektrisch aufladbaren Kathode (32), wobei die Kathode (32) an einem Ende eine elektrisch isolierend wirkende Isolierlage (31) aufweist, durch die ein Eingriffsabschnitt (24) der Kathode (32) überstehend ragt, wobei der Eingriffsabschnitt (24) von segmentartigen, in Axialrichtung verlaufenden Isolierabschnitten (26) umgeben ist, zwischen denen Wirkbereiche der Kathode (32) unabgedeckt sind, **dadurch gekennzeichnet, dass** durch das Material der Isolierlage (31) wenigstens ein Elektrolyt-Flüssigkeitsleitkanal (34) vorhanden ist.

## Claims

1. Tool (22) for producing a fuel injection metering device (7), with an electrically chargeable cathode (32), wherein at one end the cathode (32) has an insulating layer (31) which acts as an electrical insulator and through which an engagement portion (24) of the cathode (32) protrudes, wherein the engagement portion (24) is surrounded by segment-like insulating portions (26) which run in an axial direction and between which operative regions of the cathode (32) are uncovered, **characterized in that** at least one electrolyte liquid guide channel (34) is present through the material of the insulating layer (31).

## Revendications

1. Outil (22) servant à fabriquer un dispositif de dosage d'injection de carburant (7), avec une cathode (32) pouvant être chargée électriquement, dans lequel la cathode (32) présente, au niveau d'une extrémité, une couche isolante (31) ayant une action d'isolation électrique, par laquelle une section de mise en prise (24) de la cathode (32) dépasse en saillie, dans laquel la section de mise en prise (24) est entourée par des sections isolantes (26) de type segment, s'étendant dans la direction axiale, entre lesquelles des zones actives de la cathode (32) sont à découvert, **caractérisé en ce que** au moins un canal d'acheminement d'électrolyte liquide (34) est présent à travers le matériau de la couche isolante (31).
